(19) **Europäisches Patentamt**

**European Patent Office**

**Office européen des brevets**

(11) **EP 1 684 094 A2**

(12) **EUROPÄISCHE PATENTANMELDUNG**

(43) Veröffentlichungstag:
26.07.2006 Patentblatt 2006/30

(51) Int Cl.:
*G01S 17/46* (2006.01)    *G01S 17/93* (2006.01)

(21) Anmeldenummer: 06100288.7

(22) Anmeldetag: **12.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **24.01.2005 DE 102005203191**

(71) Anmelder: **ROBERT BOSCH GMBH**
**70442 Stuttgart (DE)**

(72) Erfinder: **Haug, Karsten**
**70372 Stuttgart (DE)**

(54) **Optisches Triangulationsverfahren zur Abstandsbestimmung für Kraftfahrzeuganwendungen**

(57) Die Erfindung betrifft eine Vorrichtung 2 zur Umfelderfassung eines bewegbaren Objektes 11, insbesondere eines Kraftfahrzeuges 1, mit einer Lichtquelle 5, einer Kamera 7 und einer mit der Kamera 7 verbundenen Auswerteeinheit 8, wobei von der Lichtquelle 5 ein ebenes Lichtbündel 10 zur Darstellung einer Lichtlinie 19 auf einem potentiellen Hindernis 17 im Umfeld des Objektes 11 projizierbar und die Lichtlinie 19 mittels der Kamera 7 erfassbar ist. Zur Verbesserung der Hindemiserkennung wird vorgeschlagen, dass die Lichtquelle 5 und die Kamera 7 mit einem der Auswerteeinheit 8 als Grundlage für eine Bestimmung eines Hindernisabstandes 22 zwischen Objekt 11 und Hindernis 17 dienenden Basisabstand 23 voneinander angeordnet sind. Darüber hinaus betrifft die Erfindung ein Kraftfahrzeug mit einer vorgenannten Vorrichtung zur Umfelderfassung sowie ein Verfahren zur Umfelderfassung eines bewegbaren Objektes.

Fig. 2

EP 1 684 094 A2

**Beschreibung**

Stand der Technik

Die Erfindung betrifft eine Vorrichtung zur Umfelderfassung eines bewegbaren Objektes, insbesondere eines Kraftfahrzeuges, mit einer Lichtquelle, einer Kamera und einer mit der Kamera verbundenen Auswerteeinheit, wobei von der Lichtquelle ein ebenes Lichtbündel zur Darstellung einer Lichtlinie auf einem potentiellen Hindernis im Umfeld des Objektes projizierbar und die Lichtlinie mittels der Kamera erfassbar ist. Außerdem bezieht sich die Erfindung auf ein Kraftfahrzeug mit einer solchen Vorrichtung. Darüber hinaus betrifft die Erfindung ein Verfahren zur Umfelderfassung eines bewegbaren, eine Lichtquelle und eine Kamera aufweisenden Objektes, insbesondere eines Kraftfahrzeuges, wobei ein von der Lichtquelle abgestrahltes ebenes Lichtbündel auf ein potentielles Hindernis im Umfeld des Objektes als Lichtlinie projiziert wird und wobei die Lichtlinie von der Kamera erfasst wird.

Aus EP 0 361 188 A2 ist eine vorgenannte Vorrichtung sowie ein eingangs beschriebenes Kraftfahrzeug und Verfahren bekannt. In diesem Dokument ist ein Verfahren zum Schutz eines Fahrzeuges gegen Kollisionen beschrieben, wonach ein Fahrweg des Fahrzeuges in einer Fahrtrichtung vor dem Fahrzeug durch einen von dem Fahrzeug schräg zu einem Boden hin gerichteten Lichtvorhang beleuchtet wird, der auf den Boden in einer sich quer zur Fahrtrichtung erstreckenden Auftrefflinie auftrifft. Diese Auftrefflinie wird vom Fahrzeug aus überwacht. Bei Unterbrechungen oder Versatz von Linienbereichen der Auftrefflinie erhält der Antrieb des Fahrzeugs einen Steuerbefehl, es erfolgt ein aktiver Eingriff in die Steuerung des Fahrzeugs. Außerdem ist aus dem vorgenannten Dokument auch ein kollisionsgeschütztes Fahrzeug bekannt, auf dem ein Laser und eine Linse exzentrisch im Laserlicht angeordnet ist. Das aus der Linse austretende Licht ist nach Austritt aus dem Fahrzeug schräg zu einem Boden hin gerichtet. Ferner sind eine einen Auftrefflinienbereich des Laserlichts auf den Boden überwachende Kamera und eine mit der Kamera verbundene Auswerteeinheit vorgesehen.

Darüber hinaus offenbart DE 195 07 957 C1 ein Kraftfahrzeug mit einer seitlich in einem Außenspiegel angebrachten optischen Abtasteinrichtung zur berührungslosen Abtastung eines seitlichen Fahrbahnbereiches und einer der Abtasteinrichtung nachgeschalteten Auswerteeinheit. Die optische Abtasteinrichtung beinhaltet nahe beeinander liegend in dem Außenspiegel mehrere nebeneinander angeordnete Infrarot-Sendeelemente und ein zugehöriges Charge-Coupled Device(CCD)-Array zur Abtastung einer Fahrbahnoberfläche zwecks Erfassung einer Fahrspurbegrenzung. Das CCD-Array und die Auswerteeinheit sollen allgemein zur Laufzeitbestimmung, Kontrastbestimmung und Konturenerkennung aus den von der Abtasteinrichtung zugeführten Daten eingerichtet sein.

Eine Entfernungsmessvorrichtung für ein Fahrzeug offenbart EP 0 686 857 A2. Dabei wird ein Laserstrahl in Richtung eines Zielfahrzeuges ausgesendet und durch Detektion eines von dem Zielfahrzeug reflektierten Laserstrahles eine Entfernung zu dem Zielfahrzeug berechnet. Zudem wird in diesem Dokument eine Entfernungsmessvorrichtung mit einer Lichtabstrahlvorrichtung und einem Signalverarbeitungsteil zum Erfassen eines reflektierten Laserstrahles offenbart.

Ein Verfahren zur Überwachung der Umgebung eines fahrenden Fahrzeugs sowie eine auf dem Fahrzeug angebrachte Vorrichtung zur Ausführung des Verfahrens mit einer Kamera und einem Strahlabtast-Laserradar zur Erfassung von Fahrzeugen auf einer Straße und in einer Fahrspur beschreibt DE 196 29 775 A1. Das Strahlabtast-Laserradar ist so auf dem Fahrzeug angebracht, dass das Zentrum seiner optischen Achse mit der optischen Achse der Kamera übereinstimmt. Wenn in Ausstrahlungsrichtung des Laserradars eine Reflexion stattfindet, empfängt das Laserradar das reflektierte Licht, und die Entfernung zum reflektierenden Objekt in Vorwärtsrichtung des Fahrzeuges wird durch Messung einer Ausbreitungsverzögerungszeit von Ausstrahlung bis Empfang des reflektierten Lichtes erfasst. Es wird mithin eine Laufzeitmessung vorgenommen.

Darüber hinaus offenbart US 5 701 122 A ein Kraftfahrzeug mit einem Frontstoßfänger mit einer Frontschürze, an der ein Paar optischer Sensoreinheiten angeordnet ist. Die Sensoreinheiten können eine Entfernung von der Frontschürze zu einem Festkörper in der Nähe der Frontschürze detektieren. Die Entfernung wird entsprechend einem Ausgangssignal eines optischen Detektors anhand der Intensität des reflektierten Lichtes bestimmt, wenn Licht von einem optischen Sender in den optischen Detektor zurück reflektiert wird.

Außerdem ist eine Kamera bekannt, die imstande ist, ein Bild von einem Objekt zu machen und gleichzeitig die Entfernung zwischen Kamera und Objekt zu messen. Die Kamera ist mit einem Laserentfernungsmesser durch ein Lichtsplittungselement verbunden.

Ausgehend vom Stand der Technik liegt der Erfindung die Aufgabe zugrunde, eine Vorrichtung zur Umfelderfassung zu schaffen, die neben einer Hindernisdetektion auf einfache Weise auch eine Erfassung des Abstandes zu dem Hindernis ermöglicht. Weiterhin liegt der Erfindung die Aufgabe zugrunde, ein Kraftfahrzeug mit einer solchen Vorrichtung zu liefern. Außerdem ist es Aufgabe der Erfindung, ein Verfahren zur Umfelderfassung anzugeben, mittels dessen neben einer Hindernisdetektion eine Abstandsbestimmung zu dem Hindernis vorgenommen werden kann.

Die erstgenannte Aufgabe wird erfindungsgemäß dadurch gelöst, dass bei einer Vorrichtung der eingangs genannten Art die Lichtquelle und die Kamera mit einem der Auswerteeinheit als Grundlage für eine Bestimmung eines Hindernisabstandes zwischen Objekt und Hindernis dienenden Basisabstand voneinander angeordnet sind.

Ferner wird die oben zweitgenannte Aufgabe erfindungsgemäß gelöst mit einem Kraftfahrzeug der eingangs genannten Art, bei dem die Lichtquelle im Kraftfahrzeugheck zur Abstrahlung des Lichtbündels in einen rückwärtigen Bereich des Kraftfahrzeuges und die Kamera im Kraftfahrzeugheck zur Erfassung eines Bildes im rückwärtigen Bereich des Kraftfahrzeuges angeordnet ist oder bei dem die Lichtquelle an einer Kraftfahrzeuglängsseite zur Abstrahlung des Lichtbündels in einen seitlichen Bereich des Kraftfahrzeuges und die Kamera an der gleichen Kraftfahrzeuglängsseite zur Erfassung eines Bildes im seitlichen Bereich des Kraftfahrzeuges angeordnet ist.

Die oben drittgenannte Aufgabe wird erfindungsgemäß dadurch gelöst, dass bei einem Verfahren der eingangs genannten Art mittels einer Triangulationsmessung der Hindernisabstand von Objekt und Hindernis ausgehend von einem Basisabstand zwischen Lichtquelle und Kamera ermittelt wird.

Vorteile der Erfindung

Der Basisabstand liegt erfindungsgemäß als definierter, vorgegebener Abstand zwischen Kamera und Lichtquelle vor. Bei der Erfindung kann vorzugsweise nur in dem Fall, in dem ein Hindernis im Umfeld des bewegbaren Objektes vorhanden ist, ein Abbild dieses Objektes erfasst werden, so dass das extrahierte Datenvolumen vorteilhaft gering gehalten werden kann und die Detektion vereinfacht wird. Durch die Projektion einer Lichtlinie können gegenüber einem einfachen Lichtstrahl zusätzliche Informationen, zum Beispiel über die Gestalt des Hindernisses, gewonnen werden. Die Lichtlinie darf in eingeschränktem Umfang auch Lücken aufweisen, sie kann beispielsweise aus einer Anzahl von Lichtpunkten bestehen, deren Abstand so gering ist, dass sie in ihrer Gesamtheit unmittelbar als Linie erkennbar sind. Somit kann das Lichtbündel entweder aus einer unendlichen Anzahl von in einer Ebene angeordneten Lichtstrahlen oder aus einer signifikanten, gegebenenfalls großen, aber begrenzten Anzahl solcher Lichtstrahlen bestehen. Als Wellenlänge des Lichtes kann bevorzugt eine Wellenlänge zwischen 780 und 1.000 nm gewählt werden, die nur für Kameras, nicht aber für das menschliche Auge sichtbar ist; grundsätzlich kann aber auch eine sichtbare Wellenlänge gewählt werden. Bei der Erfindung ist es nicht notwendig, eine hochauflösende Kamera mit aufwendiger Optik zu verwenden, sondern es ist hinreichend, eine einfache, handelsübliche Kamera einzusetzen, da lediglich eine Linienstruktur in einem Grauwertbild detektiert werden muss (das heißt es ist nur eine Grauwertdetektion erforderlich). Wesentlich für die Erfindung ist, dass ein erheblicher Basisabstand, der allgemein auch als Grundabstand bezeichnet werden kann, zwischen Kamera und Lichtquelle vorliegt. Dadurch kann - ohne dass zum Beispiel eine aufwendige Laufzeitmessung eines ausgesandten Lichtstrahls erforderlich ist - unter Zugrundelegung des Basisabstandes als festliegender Größe in einfacher Weise der Hindernisabstand zwischen bewegbarem Objekt und Hindernis bestimmt werden. Hierzu ist keine aufwendige 2-D-Bildverarbeitung erforderlich, sondern nur eine zeilen- oder spaltenbasierte Auswertung (1-D-Auswertung). Dadurch kann die Auswerteeinheit einen einfacheren, kostengünstigeren Aufbau haben als bei einer 2-D-Bildverarbeitung. Der Triangulationsmessung des erfindungsgemäßen Verfahrens wird neben dem Basisabstand zwischen Lichtquelle und Kamera vorzugsweise ein Winkel zwischen abgestrahltem Lichtbündel und (konstruktiv vorgegebenem) Basisabstand sowie ein (durch die Kamera bestimmter) Winkel zwischen von dem Hindernis reflektiertem Lichtbündel und Basisabstand zugrunde gelegt. Von sehr großem Vorteil ist es, dass mit der Erfindung eine eine hohe Messgenauigkeit und Messsicherheit gewährleistende aktive Lasertriangulation durchgeführt werden kann. Aufgrund aktiver Beleuchtung mittels der Lichtquelle ist die Erfindung sowohl bei Tageslicht als auch bei Dunkelheit uneingeschränkt einsetzbar. Die Erfindung eignet sich insbesondere aufgrund ihres kompakten und einfachen Aufbaus und ihrer hohen Zuverlässigkeit sehr gut für ein bewegbares Objekt, das ein Kraftfahrzeug ist, und zwar sowohl für einen Personenkraftwagen als auch für ein Nutzfahrzeug. Bei Personenkraftwagen sind für eine Messung in seitlicher Richtung vorteilhaft folgende Einbauorte für Lichtquelle und Kamera vorstellbar: 1.) Kamera vorne seitlich in einem Stoßfänger, Lichtquelle in einer B-Säule oder umgekehrt, 2.) Kamera vorne seitlich im Stoßfänger, Lichtquelle bezogen auf die Fahrzeuglängsachse auf Höhe einer A-Säule, 3.) Kamera hinten seitlich in einem Stoßfänger, Lichtquelle in einer B-Säule oder umgekehrt, 4.) Kamera hinten seitlich im Stoßfänger, Lichtquelle in einer C-Säule oder umgekehrt. Vorzugsweise kann die Lichtquelle in eine vorhandene Leuchte, beispielsweise eine Rückleuchte, des Kraftfahrzeuges integriert sein. Das ist insbesondere bei Verwendung von Laserdioden als Lichtquelle von Vorteil, da somit die Möglichkeit gegeben ist, bereits konstruktiv-mechanisch einen Mindestabstand zu einem potentiellen Betrachter einzuhalten und so dessen Augenlicht zu schützen. Wird mit der Erfindung beispielsweise eine Parklückenvermessung eines Kraftfahrzeuges vorgenommen, ist es vorteilhaft, die Triangulationsmessung mit einem kleinen Triangulationswinkel vorzunehmen; denn am hinteren Ende der Parklücke kann kurzzeitig eine Abschattung der Lichtlinie erfolgen, wobei die Größe des Abschattungsbereiches mit dem Triangulationswinkel steigt. Alternativ ist es auch denkbar, eine Lichtquelle in der Kraftfahrzeugmitte mit zwei Kameras zu koppeln, so dass stets mindestens ein Messsignal zur Verfügung steht.

Grundsätzlich kann als Lichtquelle eine beliebige Lichtquelle, beispielsweise eine LED oder ein LED-Array, vorgesehen werden, mittels derer eine Lichtlinie von hinreichender Helligkeit und Schärfe auf ein Hindernis projizierbar ist. Insbesondere für einen sehr zuverlässigen Betrieb der erfindungsgemäßen Vorrichtung beispielsweise auch bei großer Umgebungshelligkeit ist es hingegen von besonderem Vorteil, wenn gemäß einer Weiterbildung der Erfindung die Lichtquelle einen Laser mit nachgeschaltetem Linienprojektor aufweist.

Die Zuverlässigkeit der Vorrichtung wird vorteilhaft zusätzlich erhöht, wenn gemäß einer anderen Weiterbildung der Erfindung die Kamera ein schmalbandiges optisches Bandpassfilter aufweist. Dieses Bandpassfilter ist auf die Wellenlänge der Lichtquelle abgestimmt, so dass - ohne signifikante Störungen durch Umweltlichteinflüsse - nur von der Lichtquelle abgestrahltes, an einem Hindernis reflektiertes Licht von der Kamera abgebildet wird.

Gemäß einer anderen vorteilhaften Weiterbildung der Erfindung beträgt der Basisabstand zwischen Lichtquelle und Kamera in etwa 0,15 bis 0,5 m, wodurch sich die Vorrichtung vorzugsweise an einem Kraftfahrzeug im Kraftfahrzeugheck als abstandsmessende Rückfahrkamera zur präzisen Bestimmung eines Hindernisabstandes eignet.

Alternativ beträgt gemäß einer anderen vorteilhaften Weiterbildung der Erfindung der Basisabstand zwischen Lichtquelle und Kamera mindestens 0,5 m. Auf diese Weise kann mit der Vorrichtung in Zuordnung zu einem Kraftfahrzeug eine genaue und zuverlässige Parklückenvermessung vorgenommen werden.

Eine Mensch-Maschine-Schnittstelle ist gemäß einer anderen vorteilhaften Weiterbildung der Erfindung zur Signalisation des Hindernisabstandes vorgesehen. Zum Beispiel ein Bediener des bewegbaren Objektes, insbesondere ein Fahrzeugführer, kann über die Mensch-Maschine-Schnittstelle direkt über den Hindernisabstand informiert werden. Vorzugsweise kann als Mensch-Maschine-Schnittstelle diejenige einer gegebenenfalls in dem bewegbaren Objekt vorhandenen, beispielsweise unter der Bezeichnung Parkpilot bekannten und auf Ultraschallsensoren basierenden, Einparkhilfsvorrichtung verwendet werden. Die Mensch-Maschine-Schnittstelle kann zum Beispiel akustisch und/oder optisch arbeiten, wobei ein aufwendiger und kostenintensiver Bildschirm grundsätzlich nicht erforderlich ist. Zur optischen Darstellung kann gegebenenfalls ein Parkpilotsteuergerät modifiziert werden, so dass beispielsweise auch Kamerasignale einer Rückfahrkamera ausgewertet werden können. Es ist auch denkbar, dass eine Ansteuerschaltung einer Parkpilot-Mensch-Maschine-Schnittstelle in eine Ansteuerschaltung zum Beispiel einer Rückfahrkamera integriert wird. Der Vorteil einer Verwendung einer bereits vorhandenen Parkpilot-Mensch-Maschine-Schnittstelle besteht unter anderem darin, dass dem Fahrzeugführer eine gewohnte Signalisation erhalten bleibt, unabhängig davon, ob Abstandsinformationen von Sensoren des Parkpiloten oder beispielsweise von einer Rückfahrkamera herrühren. So wird ein einfacher Übergang von Parkpilot-(Ultraschall-)Sensoren zu einer Rückfahrkamera unterstützt, auch wenn kein Bildschirm (beispielsweise einer Navigationseinrichtung) vorhanden ist.

Gemäß einer vorteilhaften Weiterbildung der Erfindung ist eine Anzeigevorrichtung zur Visualisierung des Hindernisabstandes vorgesehen. Die Anzeigevorrichtung kann allgemein zum Beispiel eine Leuchtmittel-Kette, gebildet beispielsweise aus verschiedenfarbigen Leuchtdioden, aufweisen oder auch einen hochauflösenden Bildschirm, der zum Beispiel gemeinsam mit einer Navigationseinrichtung genutzt wird, umfassen. Damit kann beispielsweise der Bediener des bewegbaren Objektes, insbesondere der Fahrzeugführer, unmittelbar und leicht erfassbar über den Hindernisabstand informiert werden und auf dieser Grundlage eine weitere Bedienung des Objektes, beispielsweise eines von ihm gefahrenen Personenkraftwagens, vornehmen. Auf der Anzeigevorrichtung kann der Hindernisabstand graphisch dargestellt und gegebenenfalls im Klartext eingeblendet sein. Es können zur leichteren Orientierung auch statische Linien auf der Anzeigevorrichtung dargestellt sein, die beispielsweise feste Hindernisabstände von 0,25 m, 0,5 m, 1 m und 2 m vorgeben können.

Besonders einfach kann die Bestimmung des Hindernisabstandes vorgenommen werden, wenn gemäß einer anderen vorteilhaften Weiterbildung der Erfindung das Lichtbündel parallel zu einer Oberfläche angeordnet ist, auf welcher das Objekt bewegbar ist. Eine derart ausgebildete Vorrichtung ist zudem besonders gut geeignet für eine abstandsmessende Rückfahrkamera und/oder eine Totwinkelüberwachung eines Kraftfahrzeuges.

Gemäß einer anderen vorteilhaften Weiterbildung der Erfindung ist das Lichtbündel senkrecht zu einer Oberfläche angeordnet, auf welcher das Objekt bewegbar ist. Eine solche Vorrichtung ist vorteilhaft an einem Kraftfahrzeug für eine Parklückenvermessung verwendbar. Mit dieser Vorrichtung können insbesondere auch Fahrbahnmarkierungen und Fahrbahnbegrenzungen, wie zum Beispiel Bordsteine, auf einfache Weise erfasst werden.

Gemäß einer vorteilhaften Weiterbildung des erFmdungsgemäßen Verfahrens werden die Lichtstrahlen des Lichtbündels von der Lichtquelle gepulst abgestrahlt. Bevorzugt ist die gepulste Abstrahlung mit einer Belichtungsphase der Kamera synchronisiert.

Wird gemäß einer anderen vorteilhaften Weiterbildung der Erfmdung ein von der Kamera erfasstes Bild an eine Auswerteeinheit übermittelt und erfolgt bei Erfassung einer ununterbrochenen Lichtlinie eine Signalisation durch die Auswerteeinheit, so kann in besonders einfacher Weise das Vorhandensein eines glattflächigen Hindernisses, zum Beispiel einer Häuserwand, mitgeteilt werden. Ein vorgenanntes Verfahren ist zum Beispiel für eine abstandsmessende Rückfahrkamera eines Kraftfahrzeuges vorteilhaft einsetzbar.

Gemäß einer anderen vorteilhaften Weiterbildung der Erfindung wird ein von der Kamera erfasstes Bild an eine Auswerteeinheit übermittelt, und es erfolgt bei Erfassung einer unterbrochenen Lichtlinie eine Signalisation durch die Auswerteeinheit. Hierbei kann man sich den Umstand zunutze machen, dass an bestimmten Hindernissen, zum Beispiel an auf einer Nachbarspur fahrenden Kraftfahrzeugen, Teile der Lichtlinie reflektiert werden und beispielsweise eine Seitenkontur des auf der Nachbarspur fahrenden Kraftfahrzeuges repräsentieren. Diese Hindernisse können somit in einfacher Weise von eine geradlinige Struktur aufweisenden Hindernissen, wie zum Beispiel Leitplanken oder Tunnelwänden am Fahrbahnrand, unterschieden werden. Dieses Verfahren ist folglich besonders günstig für eine Totwinkelüberwachung eines Kraftfahrzeuges und/oder für eine Fahrzeugparklückenvermessung einsetzbar.

Die Übersichtlichkeit wird für einen Bediener vorteilhaft erhöht, wenn gemäß einer Weiterbildung der Erfindung das Hindernis auf einer Anzeigevorrichtung dargestellt wird. In einfacher Weise kann die Hindernisdarstellung zum Beispiel mittels Leuchtpunkten erfolgen; es ist aber auch denkbar, eine Kontur des Hindernisses anzuzeigen.

Gemäß einer anderen vorteilhaften Weiterbildung der Erfindung wird von der Kamera abwechselnd ein Bild mit eingeschalteter Lichtquelle und ein Bild mit ausgeschalteter Lichtquelle erfasst. Die bei eingeschalteter Lichtquelle erfassten Bilder können dann einer Hindernisabstandsmessung dienen, die bei ausgeschalteter Lichtquelle erfassten Bilder können für eine ungestörte Darstellung beispielsweise eines mittels einer Rückfahrkamera erfassten Kraftfahrzeugrückraums verwendet werden. Sofern die Kamera mit einem abgestimmten optischen Filter versehen ist, kann für eine verbesserte Aufnahme eine separate flächige Beleuchtung zum Beispiel eines rückwärtigen Kraftfahrzeugumfeldbereiches vorgesehen sein. Die Beleuchtung kann beispielsweise mittels nicht gerichtet abstrahlender Leuchtdioden erfolgen, die Licht einer Wellenlänge des von oben genannter Lichtquelle abstrahlbaren Lichtes enthalten. Vorteilhaft kann ein Hervorheben von Objekten in einer Messebene dadurch erfolgen, dass die Lichtquelle abwechselnd eine größere Anzahl von Bildern, zum Beispiel zehn Bilder, eingeschaltet und eine größere Anzahl von Bildern, zum Beispiel ebenfalls zehn Bilder, ausgeschaltet wird. Hierdurch können Objekte in der Messebene, die für den Fahrzeugführer potentielle Hindernisse darstellen, niederfrequent blinken und so dem Fahrzeugführer als noch deutlichere Signalisation, insbesondere Warnung, dienen.

Gemäß einer anderen vorteilhaften Weiterbildung der Erfindung werden Ortskoordinaten des Hindernisses in eine digitale Landkarte aufgenommen. Auf diese Weise kann eine ermittelte Position des Hindernisses, zum Beispiel eines Bordsteines oder eines bereits geparkten Kraftfahrzeuges, unter Angabe von dessen Ortskoordinaten in die digitale Landkarte beispielsweise einer Navigationseinrichtung übernommen und daraus die vollständige Geometrie zum Beispiel einer Parklücke bestimmt werden. Dabei ist eine Nutzung dieser Informationen für automatisierte Einparkvorgänge möglich.

Von der Kamera wird gemäß einer anderen vorteilhaften Weiterbildung der Erfindung ein Grauwertbild zumindest eines Bereiches des Umfeldes des bewegbaren Objektes erfasst. So kann mittels einer zusätzlichen Grauwertbildauswertung zum Beispiel eine Parklückenbestimmung mit erhöhter Präzision erfolgen, wenn eine seitliche Begrenzung der Parklücke, beispielsweise eine auf eine Fahrbahn aufgemalte Begrenzungslinie anstelle einer Bordsteinkante, nicht unmittelbar als Hindernis in Form einer konturierten Lichtlinie hervortritt. In einem solchen Fall kann bei Fehlen eines signifikanten Absatzes in der Lichtlinie durch Grauwertbildauswertung - beispielsweise mittels eines Kantenfilters - das Hindernis, das heißt hier die Begrenzungslinie, als Grauwertlinie bestimmt werden. Die Position eines Bordsteines in einem Kamerabild bestimmt sich dann zum Beispiel als Schnittpunkt zwischen einer konturierten Lichtlinie und der Grauwertlinie. Auf Grundlage der Grauwertbilderfassung kann vorteilhaft zusätzlich auch eine Klassifikation des Hindernisses vorgenommen werden. Eine solche Klassifikation kann zum Beispiel anhand eines Grauwertverlaufes in der Umgebung einer Lichtlinie erfolgen. Hierdurch wird die Zuverlässigkeit des erfindungsgemäßen Verfahrens weiter erhöht, und es werden zusätzliche Informationen gewonnen, die zum Beispiel im Rahmen eines Einparkmanövers als weitere Hilfe dienen können.

Zeichnung

Ausführungsbeispiele der Erfindung sind in der Zeichnung schematisiert dargestellt und werden nachfolgend näher beschrieben. Es zeigen

Figuren 1, 2      ein Kraftfahrzeug mit einer Vorrichtung zur Umfelderfassung,
Figur 3           eine die Geometrie der Vorrichtung nach Figuren 1, 2 verdeutlichende Darstellung,
Figur 4           ein weiteres Kraftfahrzeug mit einer anderen Vorrichtung zur Umfelderfassung in einer Draufsicht,
Figuren 5, 6      das Kraftfahrzeug aus Figur 4 jeweils in einer Seitenansicht von vorne und
Figuren 7, 8      das Kraftfahrzeug aus Figur 4 jeweils in einer weiteren Seitenansicht.

Beschreibung der Ausführungsbeispiele

In sämtlichen Figuren sind sich entsprechende Elemente mit gleichen Bezugszeichen versehen.

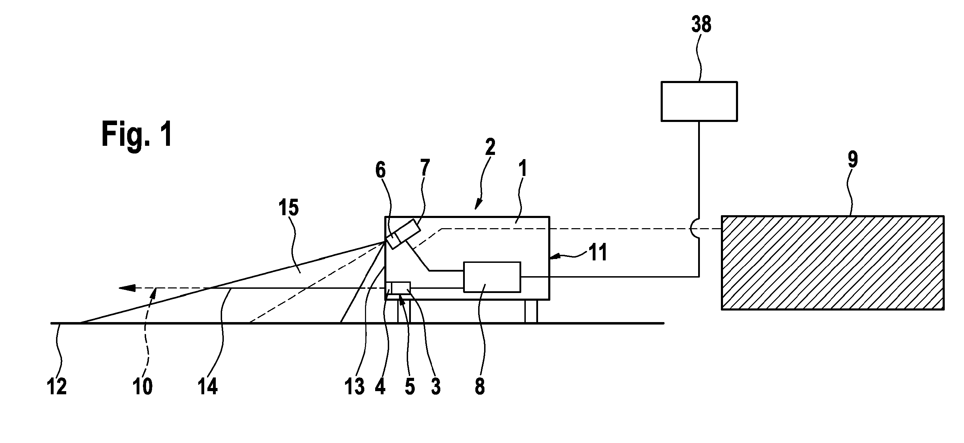

Figur 1 zeigt in einer Seitenansicht ein Kraftfahrzeug 1 mit einer Vorrichtung 2 zur Umfelderfassung des ein bewegbares Objekt 11 darstellenden Kraftfahrzeuges 1. Die Vorrichtung 2 zur Umfelderfassung ist mit einer einen Laser 3 mit nachgeschaltetem Linienprojektor 4 aufweisenden Lichtquelle 5 und mit einer ein schmalbandiges optisches Bandpassfilter 6, das auf die Wellenlänge des von der Lichtquelle 5 abstrahlbaren Lichtes abgestimmt ist und Licht dieser Wellenlänge ungefiltert hindurchlässt, aufweisenden Kamera 7 versehen.

Die Kamera 7 und die Lichtquelle 5 sind elektrisch mit einer elektronischen Auswerteeinheit 8 verbunden. Ein Kamerabild 9, das als Kamerasignal zur internen Weiterbearbeitung in der Vorrichtung 2 zur Umfelderfassung verwendet wird, ist zur Veranschaulichung im rechten Teil der Figur 1 gezeigt. Mit dem Kamerabild 9 und gegebenenfalls seiner Auswertung wird ein Fahrer des Kraftfahrzeuges somit nicht belastet, das Kamerabild 9 dient lediglich zur internen Signalverarbeitung.

Außerdem ist eine ebenfalls elektrisch mit der Auswerteeinheit 8 verbundene, eine Warneinrichtung für den Fahrer bildende Anzeigevorrichtung 38, die grundsätzlich aber auch eine akustische Warnvorrichtung sein oder zusätzlich aufweisen kann, vorgesehen, mittels derer ein Hindernisabstand visualisierbar ist oder bei Anwesenheit eines Objektes in einem toten Winkel gegebenenfalls eine optische und/oder akustische Warnung erfolgen kann. Die Anzeigevorrichtung 38, die Bestandteil einer Mensch-Maschine-Schnittstelle sein kann, ist in der schematisierten Darstellung der Zeichnung nur der Deutlichkeit halber vergrößert und außerhalb des Kraftfahrzeuges 1 gezeigt.

Von der Lichtquelle 5 ist ein ebenes Lichtbündel 10 abstrahlbar, wobei das Lichtbündel 10 parallel zu einer eine Fahrbahn bildenden Oberfläche 12, auf der das Kraftfahrzeug 1 bewegbar ist, angeordnet ist. Das Lichtbündel 10 ist somit waagerecht ausgerichtet.

Die Lichtquelle 5 ist in diesem Ausführungsbeispiel an einer Kraftfahrzeuglängsseite 13 zur Abstrahlung des Lichtbündels 10 in einen seitlichen Bereich des Kraftfahrzeuges 1 angeordnet. An der gleichen Kraftfahrzeuglängsseite 13 ist die Kamera 7 zur Erfassung eines Bildes im seitlichen Bereich des Kraftfahrzeuges 1 angeordnet.

Die Vorrichtung 2 zur Umfelderfassung dient einer Totwinkelüberwachung des Kraftfahrzeuges 1. Ein Messbereich 14 ergibt sich aus einem Kameraerfassungsbereich 15 und dem Lichtbündel 10. Befmdet sich - wie in Figur 1 dargestellt - kein Hindernis im Messbereich 14, so zeigt das Kamerabild 9 kein rückgestreutes Licht des Lichtbündels 10, das Kamerabild 9 ist somit näherungsweise dunkel.

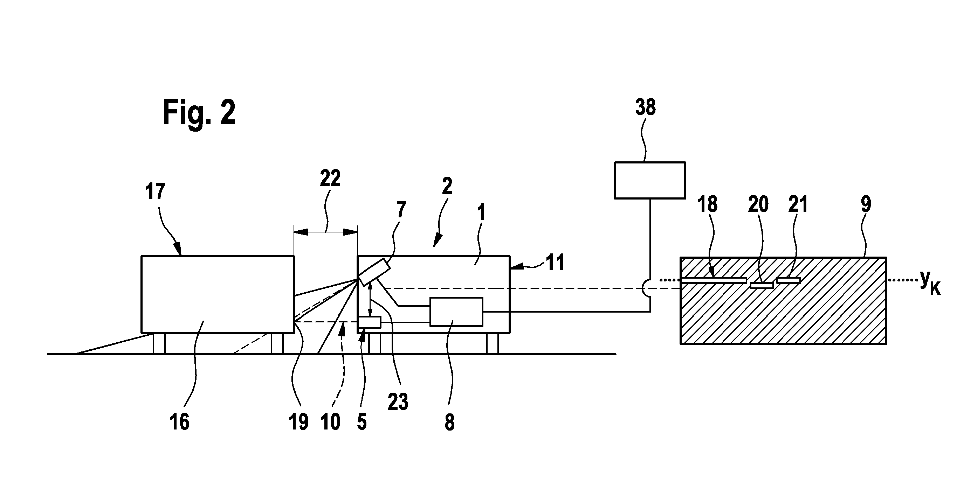

In Figur 2 ist eine Situation dargestellt, in welcher sich ein von einem weiteren Kraftfahrzeug 16 gebildetes Hindernis 17 in dem Messbereich 14 (Figur 1) befindet. In diesem Fall wird die Seitenkontur des weiteren Kraftfahrzeuges 16 im Kamerabild 9 sichtbar. In dem gezeigten Beispiel ist das weitere Fahrzeug 16 in etwa mit seiner halben Fahrzeuglänge in den Messbereich 14, der allgemein auch als Überwachungsbereich bezeichnet werden kann, eingefahren. In dem Kamerabild 9 ist eine konturierte Lichtlinie 18 sichtbar.

Die Lichtlinie 18 im Kamerabild 9 ist eine Abbildung einer auf dem Hindernis 17 dargestellten, aus einer Projektion des Lichtbündels 10 von der Lichtquelle 5 entstandenen Lichtlinie 19, die von der Kamera 7 erfasst wurde. Im Kamerabild 9 ist eine Kontur 20 eines Vorderreifens des weiteren Kraftfahrzeuges 16 und eine Kontur 21 des vorderen Fahrzeugendes dieses Kraftfahrzeuges dargestellt. Hinterräder des weiteren Kraftfahrzeuges 16 sind im Kamerabild 9 (noch) nicht sichtbar.

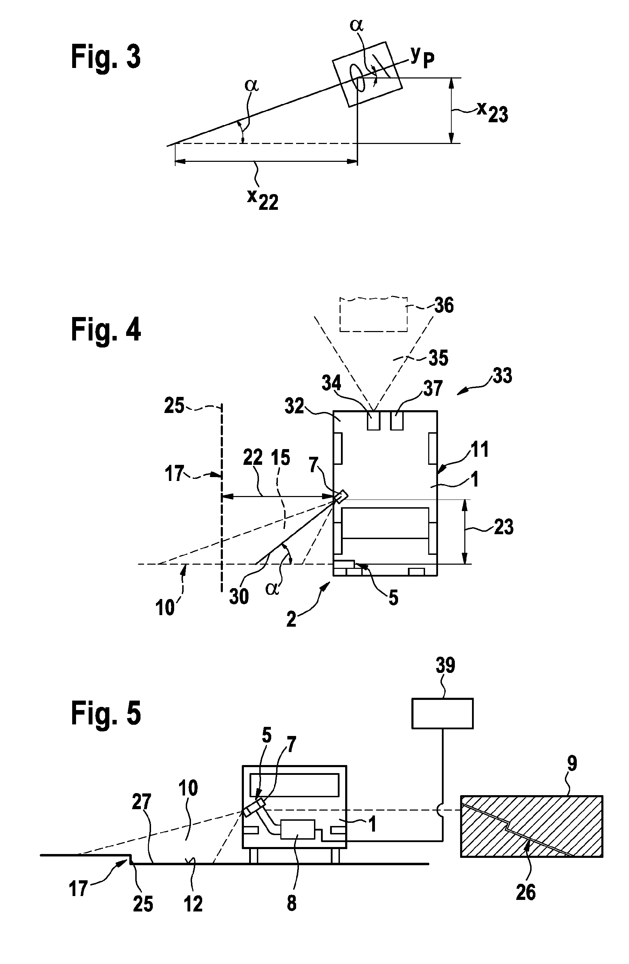

Für eine Bestimmung eines Hindernisabstandes 22 zwischen dem die Vorrichtung 2 zur Umfelderfassung aufweisenden Kraftfahrzeug 1 und dem weiteren Kraftfahrzeug 16 sind die Lichtquelle 5 und die Kamera 7 mit einem Basisabstand 23 voneinander angeordnet. Eine Abstandsberechnung erfolgt auf Grundlage einer Pixelposition $y_K$ einer Fahrzeugkontur des weiteren Kraftfahrzeuges 16, woraus ein Blinkwinkel der Kamera 7 und hieraus mittels trigonometrischer Zusammenhänge der Hindernisabstand 22 berechnet wird (bezüglich der trigonometrischen Zusammenhänge vergleiche auch Figur 3). Bezüglich der Signalverarbeitung wird auf Karsten Haug: "Laser-Lichtschnittsensorik für die Automatisierung von Metall-Schutzgasschweißprozessen" , Kap. 2.3.3 und 3.2, Diss. Uni. Stuttgart, 2001 verwiesen.

Eine die Geometrie und insbesondere die trigonometrischen Zusammenhänge der Vorrichtung 2 zur Umfelderfassung nach Figuren 1, 2 verdeutlichende Darstellung zeigt Figur 3. Unter Berücksichtigung eines aus einer Pixelposition $y_P$ im Kamerabild ableitbaren Triangulationswinkels $\alpha$ lässt sich in Kenntnis eines Abstandes $x_{23}$, der dem Basisabstand 23 entspricht, ein dem Hindernisabstand 22 entsprechender Abstand $x_{22}$ gemäß folgender Zusammenhänge bestimmen:

$$\tan\alpha = \frac{x_{23}}{x_{22}} \quad \Rightarrow \quad x_{22} = \frac{x_{23}}{\tan\alpha} = \frac{x_{23}}{f(y_P)}$$

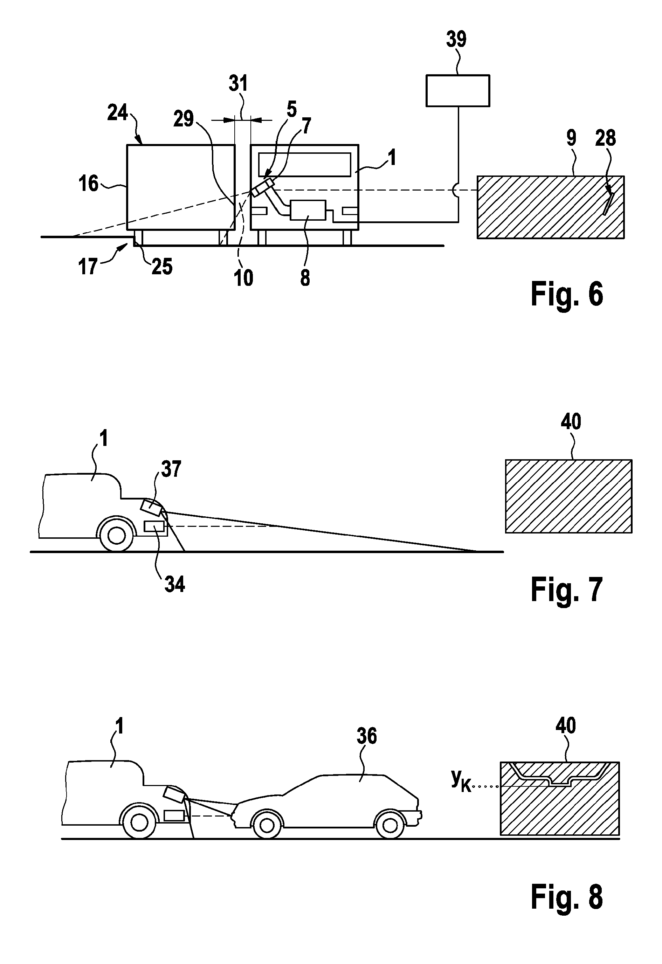

Ein als Kraftfahrzeug 1 ausgebildetes bewegbares Objekt 11 mit einer Vorrichtung 2 zur Umfelderfassung, die insbesondere zur Parklückenvermessung geeignet ist, zeigen Figuren 4 bis 6, wobei Figur 4 eine Ansicht von oben und Figuren 5, 6 jeweils eine Ansicht von vorne zeigen. Auch die vorgenannte Vorrichtung 2 weist eine ein ebenes Lichtbündel 10 abstrahlende Lichtquelle 5 und eine Kamera 7 auf. Ein Kameraerfassungsbereich 15 ist gestrichelt eingezeichnet. Das Lichtbündel 10 ist senkrecht zu einer eine Fahrbahn bildenden Oberfläche 12, auf welcher das Kraftfahrzeug 1 bewegbar ist, angeordnet.

Mit der Vorrichtung 2 zur Umfelderfassung werden hier seitliche Hindernisse 17, 24 erfasst, und zwar einerseits ein Bordstein 25 (Figuren 4, 5) und andererseits ein neben dem Bordstein 25 bereits parkendes weiteres Kraftfahrzeug 16 (Figur 6). Ein Triangulationswinkel $\alpha$ zwischen einer optischen Achse 30 der Kamera 7 und der Ebene des Lichtbündels 10 zur Durchführung einer Triangulationsmessung eines Hindernisabstandes 22, 31 zwischen dem ersten Kraftfahrzeug 1 und dem Bordstein 25 beziehungsweise dem weiteren Kraftfahrzeug 16 ist beispielhaft eingezeichnet. Der Basisabstand 23 zwischen Kamera 7 und Lichtquelle 5 beträgt in diesem Beispiel in etwa 0,5 bis 1,5 m, um einen mehrere Meter großen Messbereich abdecken zu können.

Kamera 7 und Lichtquelle 5 sind mit einer Auswerteeinheit 8 verbunden, an die allgemein eine auch unter der Bezeichnung HMI (Human-Machine Interface) bekannte Mensch-Maschine-Schnittstelle 39 angeschlossen ist. Die Mensch-Maschine-Schnittstelle 39 kann zum Beispiel optisch und/oder akustisch arbeiten und beispielsweise eine Anzeigevorrichtung aufweisen. Ferner wird jeweils ein entzerrtes Kamerabild 9 zur Veranschaulichung des Messprinzips dargestellt, und zwar nach Figur 5 eine Abbildung 26 einer Bordsteinkonturlinie 27 eines Bordsteins 25 und nach Figur 6 eine Konturlinie 29 als Abbildung 28 eines weiteren Kraftfahrzeuges 16, die eine von der Kamera 7 erfasste, aus einer Projektion des Lichtbündels 10 auf das weitere Kraftfahrzeug 16 resultierende Lichtlinie ist.

Außerdem weist das erste Kraftfahrzeug 1 (siehe Figur 4) im Kraftfahrzeugheck 32 eine weitere Vorrichtung 33 zur Umfelderfassung auf. Diese Vorrichtung 33, die eine abstandsmessende Rückfahrkamera bildet, ist mit einer Lichtquelle 34 zur Abstrahlung eines ebenen, waagerecht angeordneten Lichtbündels 35 in einen rückwärtigen Bereich des Kraftfahrzeuges 1 und mit einer Kamera 37 zur Erfassung eines Bildes einer Lichtlinie auf einem Hindernis 36 versehen. Kamera 37 und Lichtquelle 34 sind in diesem Beispiel mit einem vertikalen Abstand, der den Basisabstand bildet, von in etwa 0,15 bis 0,5 m zueinander angeordnet. Grundsätzlich müssen Kamera und Lichtquelle nicht seitlich versetzt angebracht sein, sondern sie können direkt untereinander liegen.

Figuren 7, 8 zeigen das Kraftfahrzeug 1 aus Figur 4 mit der Lichtquelle 34 und der Kamera 37 im Kraftfahrzeugheck 32 jeweils in einer weiteren Seitenansicht. Außerdem ist jeweils ein internes Kamerabild 40 der Kamera 37 dargestellt, wobei in Figur 8 eine eine Fahrzeugkontur eines das Hindernis 36 bildenden weiteren Kraftfahrzeuges angebende Pixelposition $y_K$ eingezeichnet ist.

## Patentansprüche

1. Vorrichtung zur Umfelderfassung eines bewegbaren Objektes, insbesondere eines Kraftfahrzeuges, mit einer Lichtquelle, einer Kamera und einer mit der Kamera verbundenen Auswerteeinheit, wobei von der Lichtquelle ein ebenes Lichtbündel zur Darstellung einer Lichtlinie auf einem potentiellen Hindernis im Umfeld des Objektes projizierbar und die Lichtlinie mittels der Kamera erfassbar ist, **dadurch gekennzeichnet, dass** die Lichtquelle (5) und die Kamera (7) mit einem der Auswerteeinheit (8) als Grundlage für eine Bestimmung eines Hindernisabstandes (22) zwischen Objekt (11) und Hindernis (17) dienenden Basisabstand (23) voneinander angeordnet sind.

2. Vorrichtung nach Anspruch 1, **dadurch gekennzeichnet, dass** die Lichtquelle (5) einen Laser (3) mit nachgeschaltetem Linienprojektor (4) aufweist.

3. Vorrichtung nach Anspruch 1 oder 2, **dadurch gekennzeichnet, dass** die Kamera (7) ein schmalbandiges optisches Bandpassfilter (6) aufweist.

4. Vorrichtung nach einem der vorhergehenden Ansprüche, **dadurch gekennzeichnet, dass** der Basisabstand zwischen Lichtquelle (34) und Kamera (37) in etwa 0,15 bis 0,5 m beträgt.

5. Vorrichtung nach einem der Ansprüche 1 bis 3, **dadurch gekennzeichnet, dass** der Basisabstand (23) zwischen Lichtquelle (5) und Kamera (7) mindestens 0,5 m beträgt.

6. Vorrichtung nach einem der vorhergehenden Ansprüche, **dadurch gekennzeichnet, dass** eine Mensch-Maschine-Schnittstelle (39) zur Signalisation des Hindernisabstandes (22) vorgesehen ist.

7. Vorrichtung nach Anspruch 6, **dadurch gekennzeichnet, dass** eine Anzeigevorrichtung (38) zur Visualisierung des Hindernisabstandes (22) vorgesehen ist.

8. Vorrichtung nach einem der vorhergehenden Ansprüche, **dadurch gekennzeichnet, dass** das Lichtbündel (10) parallel zu einer Oberfläche (12) angeordnet ist, auf welcher das Objekt (11) bewegbar ist.

9. Vorrichtung nach einem der vorhergehenden Ansprüche, **dadurch gekennzeichnet, dass** das Lichtbündel (10) senkrecht zu einer Oberfläche (12) angeordnet ist, auf welcher das Objekt (11) bewegbar ist.

10. Kraftfahrzeug mit einer Vorrichtung nach einem der vorhergehenden Ansprüche, **dadurch gekennzeichnet, dass** die Lichtquelle (34) im Kraftfahrzeugheck (32) zur Abstrahlung des Lichtbündels (35) in einen rückwärtigen Bereich des Kraftfahrzeuges (1) und die Kamera (37) im Kraftfahrzeugheck (32) zur Erfassung eines Bildes im rückwärtigen Bereich des Kraftfahrzeuges (1) angeordnet ist.

11. Kraftfahrzeug mit einer Vorrichtung nach einem der Ansprüche 1 bis 9, **dadurch gekennzeichnet, dass** die Lichtquelle (5) an einer Kraftfahrzeuglängsseite (13) zur Abstrahlung des Lichtbündels (10) in einen seitlichen Bereich des Kraftfahrzeuges (1) und die Kamera (7) an der gleichen Kraftfahrzeuglängsseite (13) zur Erfassung eines Bildes im seitlichen Bereich des Kraftfahrzeuges (1) angeordnet ist.

12. Verfahren zur Umfelderfassung eines bewegbaren, eine Lichtquelle und eine Kamera aufweisenden Objektes, insbesondere eines Kraftfahrzeuges, wobei ein von der Lichtquelle abgestrahltes ebenes Lichtbündel auf ein potentielles Hindernis im Umfeld des Objektes als Lichtlinie projiziert wird und wobei die Lichtlinie von der Kamera erfasst wird, **dadurch gekennzeichnet, dass** mittels einer Triangulationsmessung der Hindernisabstand (22) von Objekt (11) und Hindernis (17) ausgehend von einem Basisabstand (23) zwischen Lichtquelle (5) und Kamera (7) ermittelt wird.

13. Verfahren nach Anspruch 12, **dadurch gekennzeichnet, dass** die Lichtstrahlen des Lichtbündels (10) von der Lichtquelle (5) gepulst abgestrahlt werden.

14. Verfahren nach Anspruch 12 oder 13, **dadurch gekennzeichnet, dass** ein von der Kamera (7) erfasstes Bild an eine Auswerteeinheit (8) übermittelt wird und dass bei Erfassung einer ununterbrochenen Lichtlinie eine Signalisation durch die Auswerteeinheit (8) erfolgt.

15. Verfahren nach einem der Ansprüche 12 bis 14, **dadurch gekennzeichnet, dass** ein von der Kamera (7) erfasstes Bild an eine Auswerteeinheit (8) übermittelt wird und dass bei Erfassung einer unterbrochenen Lichtlinie eine Signalisation durch die Auswerteeinheit (8) erfolgt.

16. Verfahren nach einem der Ansprüche 12 bis 15, **dadurch gekennzeichnet, dass** das Hindernis (17) auf einer Anzeigevorrichtung (38) dargestellt wird.

17. Verfahren nach einem der Ansprüche 12 bis 16, **dadurch gekennzeichnet, dass** von der Kamera (7) abwechselnd zumindest ein Bild mit eingeschalteter Lichtquelle (5) und zumindest ein Bild mit ausgeschalteter Lichtquelle (5) erfasst wird.

18. Verfahren nach einem der Ansprüche 12 bis 17, **dadurch gekennzeichnet, dass** Ortskoordinaten des Hindernisses (17) in eine digitale Landkarte aufgenommen werden.

19. Verfahren nach einem der Ansprüche 12 bis 18, **dadurch gekennzeichnet, dass** von der Kamera (7) ein Grauwertbild zumindest eines Bereiches des Umfeldes des bewegbaren Objektes erfasst wird.

Fig. 1

EP 1 684 094 A2

Fig. 2

**Fig. 3**

$\alpha$

$\alpha$

$y_P$

$x_{23}$

$x_{22}$

**Fig. 4**

36

35

34  37  33

32  31  11

25

22  15  7

17

23

10  30  $\alpha$  5

2

**Fig. 5**

39

5  7

27  10

9

1

17  25  12  8

26

**Fig. 6**

**Fig. 7**

$y_K$

**Fig. 8**